# FASCICULE DE BREVET EUROPEEN

(11) **EP 1 196 326 B1**
(45) Date de publication et mention de la délivrance du brevet: **28.07.2004**
(21) Numéro de dépôt: 01938321.5
(22) Date de dépôt: 23.05.2001
(51) Int. Cl.: B64G 1/64, B64G 5/00

(54) **PROCEDE ET DISPOSITIF D'INTEGRATION DE SATELLITES SUR UN LANCEUR**
VERFAHREN UND VORRICHTUNG ZUR BEFESTIGUNG VON SATELLITEN AUF EINER TRÄGERRAKETE
METHOD AND DEVICE FOR INTEGRATING SATELLITES ON A LAUNCHER

(30) Priorité: 25.05.2000 FR 0006681
(43) Date de publication de la demande: 17.04.2002
(73) Titulaire: EADS SPACE Transportation SA, 75116 Paris (FR)
(72) Inventeur: D'HUBERT, Philippe, F-33540 ANDERNOS (FR); ACKET, Gaetan, F-33160 SAINT MEDARD EN JALLES (FR)
(74) Mandataire: Poulin, Gérard
(86) Numéro de dépôt international: PCT/FR2001/001602
(87) Numéro de publication internationale: WO 2001/089927

(56) Documents cités:
- WO-A-00/09396
- FR-A- 2 717 770
- US-A- 5 411 226
- US-A- 5 884 866

## Description

### Domaine technique

L'invention concerne un procédé et un dispositif permettant d'intégrer plusieurs satellites sur un même lanceur.

L'invention s'applique à tous les programmes spatiaux mettant en oeuvre des lancements multiples de satellites à partir d'un même lanceur.

### Etat de la technique

Comme l'illustre notamment le document US-A-3 380 687, l'intégration simultanée de plusieurs satellites sous la coiffe d'un même lanceur est envisagée depuis de nombreuses années.

Plus précisément, ce document propose d'embarquer sous la coiffe d'un lanceur un petit propulseur cylindrique agencé selon l'axe du lanceur et portant autour de lui deux groupes de quatre .satellites. Un mécanisme motorisé permet de faire tourner le propulseur autour de son axe propre, avant qu'il ne soit séparé du lanceur puis mis à feu. Lorsque le propulseur atteint la position désirée, les satellites sont largués en tournant autour de leur axe propre, notamment du fait du mouvement de rotation du propulseur sur lui-même.

Dans ce document US-A-3 380 687, chacun des satellites est lié à deux flasques solidaires du propulseur par un boulon explosif et par un mécanisme de liaison déconnectable automatiquement sous l'effet de la rotation du satellite.

Dans le document FR-A-2 717 770, on a proposé de monter une pluralité de satellites sous la coiffe d'un lanceur en les fixant sur un mât rapporté sous cette même coiffe selon l'axe du lanceur.

Plus précisément, le mât présente une section polygonale et chacune de ses faces définit un ou plusieurs emplacements sur lesquels peuvent être fixés les satellites. A cet effet, une interface modulaire en forme de cadre rectangulaire est fixée préalablement sur chacun des satellites, par des dispositifs de fixation déconnectables placés dans chacun des angles du cadre rectangulaire. Un organe d'éjection est associé à chacun des dispositifs de fixation. déconnectables.

La fixation du satellite muni de son interface est assurée depuis l'extérieur du mât, par exemple à l'aide de vis. Pour faciliter l'intégration du satellite sur le lanceur, l'interface porte également des broches de guidage qui viennent se loger dans des trous prévus à cet effet dans le mât. Une tirette munie - d'un verrou permet de bloquer chacune des broches une fois qu'elles ont été introduites dans les trous.

Ce dispositif d'intégration présente l'avantage d'être modulaire, ce qui permet d'intégrer un satellite relativement tardivement sur un lanceur éventuellement différent de celui qui était prévu à l'origine. Toutefois, il présente aussi certains inconvénients.

En premier lieu, la conception du dispositif d'intégration est complexe. En effet, elle fait intervenir une interface dont la fonction essentielle est de supporter les dispositifs de fixation déconnectables. Cette interface met en oeuvre un nombre important d'éléments venant s'ajouter aux éléments fonctionnels tels que les broches de guidage, les verrous de blocage, etc..

Par ailleurs, la réalisation de l'intégration depuis l'extérieur du mât comporte deux inconvénients. Tout d'abord, cette caractéristique augmente le risque d'interférence avec le satellite en cours d'intégration ou avec ceux qui sont déjà en place. D'autre part, elle complique l'accessibilité lorsque trois ou quatre satellites sont déjà montés autour du mât.

En outre, le montage de l'interface en forme de cadre sur le satellite constitue une manutention supplémentaire de l'ensemble. Cela conduit à doubler les opérations nécessaires au montage du satellite sur le mât. Les risques opérationnels sont ainsi accrus.

Enfin, le dispositif d'intégration décrit dans le document FR-A-2 717 770 implique que de nombreuses opérations soient réalisées lors de la campagne de tir proprement dite. Compte tenu des nombreuses contraintes propres à cette période, cela contribue également à accroître les risques opérationnels.

Le document US-A-5 884 866, propose un agencement voisin de celui qui est décrit dans le document FR-A-2 717 770. Dans ce cas, on monte les satellites sur un mât de section circulaire, après avoir placé autour de ce mât au moins une paire de colliers de section extérieure polygonale. A proximité des extrémités de chacune de ses faces extérieures, chaque collier supporte un dispositif de fixation déconnectable ainsi qu'un dispositif d'éjection. L'intégration d'un satellite s'effectue au moyen de quatre vis qui viennent en prise avec quatre dispositifs de fixation déconnectable implantés sur les faces correspondantes de deux colliers consécutifs.

Ce dispositif d'intégration présente des inconvénients analogues à ceux du dispositif décrit dans le document FR-A-2 717 770. En particulier, il s'agit d'un dispositif complexe et lourd dans lequel les colliers forment des pièces supplémentaires qui ont essentiellement pour fonction de supporter les dispositifs de fixation déconnectables et les dispositifs d'éjection. Par ailleurs, les satellites sont montés sur le mât depuis l'extérieur de celui-ci, ce qui se traduit par des risques d'interférence et des. problèmes d'accessibilité. Enfin, de nombreuses opérations doivent être réalisées lors de la campagne. de tir. En particulier, on doit réaliser pendant cette période la liaison mécanique, à déconnecter en vol, entre le satellite et le mât, opération qui comprend un réglage délicat et risqué.

### Exposé de l'invention

L'invention a précisément pour objet un procédé et un dispositif d'intégration de satellites dont la conception originale leur permet de résoudre les problèmes posés par les procédés et les dispositifs d'intégration existants, et notamment de régler indépendamment de l'intégration la liaison mécanique déconnectable, de simplifier l'interface entre chaque satellite et le mât, d'effectuer un maximum d'opérations avant la campagne de tir et de réaliser l'intégration des satellites par l'intérieur du mât.

Conformément à l'invention, ce résultat est obtenu au moyen d'un procédé d'intégration de satellites sur un lanceur, dans lequel on équipe le lanceur d'un support porte-satellites, procédé caractérisé en ce qu'il comprend les étapes suivantes :
- montage, sur un satellite à intégrer, d'une pluralité de mécanismes de fixation indépendants les uns des autres, comprenant chacun un premier organe d'interface fixé sur le satellite et un deuxième organe d'interface relié au premier organe d'interface par des moyens de liaison déconnectables ;
- accostage du satellite sur le support ; et
- fixation séparée du deuxième organe d'interface de chaque mécanisme de fixation sur le support.

Du fait que chaque mécanisme de fixation incorporant les moyens de liaison déconnectables est monté directement sur le satellite, indépendamment des autres, la structure est très simplifiée par rapport aux procédés d'intégration de l'art antérieur, mettant en oeuvre des interfaces en forme de cadre ou de collier portant chacune plusieurs dispositifs de fixation déconnectables.

De plus, il devient possible d'assembler et de régler les mécanismes de fixation avant de les monter sur le satellite, c'est-à-dire indépendamment de la campagne d'intégration. En outre, on peut monter les mécanismes de fixation sur le satellite avant que celui-ci ne soit accosté sur le support, indépendamment de la campagne de tir par exemple.

A l'inverse, la structure du support est réduite au minimum et l'agencement conforme à l'invention permet de fixer avantageusement le deuxième organe d'interface de chaque mécanisme de fixation sur le support, habituellement en forme de mât, depuis l'intérieur de celui-ci.

Entre autres avantages, cela permet de diminuer les temps nécessaires à l'intégration d'un satellite lors de la campagne de tir ainsi que les risques liés à cette intégration.

Dans un mode de réalisation préféré de l'invention, chaque mécanisme de fixation monté sur le satellite à intégrer comprend un capot fuselé de guidage et de protection recouvrant les moyens de fixation déconnectables. Ce capot pénètre dans une lumière correspondante du support lors de l'accostage du satellite sur celui-ci. Après la fixation du deuxième organe d'interface sur le support, le capot est enlevé. Les moyens de fixation déconnectables peuvent alors être reliés à un système de commande embarqué sur le lanceur.

Dans ce même mode de réalisation préféré de l'invention, on monte sur le satellite quatre mécanismes de fixation. On comprendra toutefois que l'invention peut être aisément adaptée à des satellites de différentes formes, conduisant à un nombre de points de fixation égal ou différent de quatre, suivant une disposition qui peut être quelconque.

L'invention a également pour objet un dispositif d'intégration de satellites sur un lanceur, comprenant un support apte à être fixé au lanceur et des moyens de montage d'une pluralité de satellites sur ledit support, caractérisé en ce que lesdits moyens de montage comprennent une pluralité de mécanismes de fixation, aptes à être montés individuellement sur un satellite à intégrer, chaque mécanisme de fixation comprenant un premier organe d'interface apte à être fixé sur le satellite et un deuxième organe d'interface relié au premier organe d'interface par des moyens de liaison déconnectables et apte à être fixé séparément au support lorsque le satellite est accosté sur celui-ci.

### Brève description des dessins

On décrira à présent, à titre d'exemple non limitatif, un mode de réalisation préféré de l'invention en se référant aux dessins annexés, dans lesquels :
- la figure 1 est une vue en perspective illustrant un dispositif d'intégration de satellites conforme à l'invention, conçu pour recevoir trois satellites dont l'un est déjà monté et un deuxième en - cours de montage ;
- la figure 2 est une vue en perspective à plus grande échelle représentant un satellite dont la face prévue pour être fixée au mât du lanceur est équipée de quatre mécanismes de fixation séparés conformes à l'invention ; et
- la figure 3 est une vue en perspective éclatée de l'un des mécanismes de fixation de la figure 2.

### Description détaillée d'un mode de réalisation préféré de l'invention

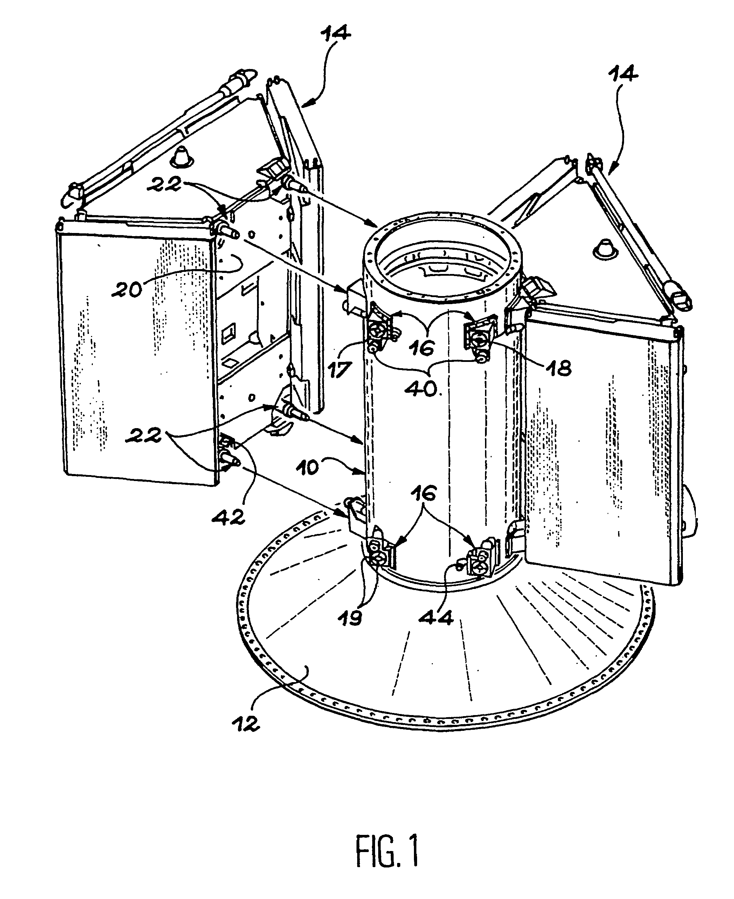

Sur la figure 1, on a représenté schématiquement un mode de réalisation préféré d'un dispositif d'intégration de satellites sur un lanceur, réalisé conformément à l'invention. Ce dispositif est destiné à permettre l'intégration de trois satellites. On comprendra toutefois qu'un tel dispositif peut être aisément adapté par un homme du métier, de façon à intégrer un nombre de satellites différent tel que quatre, six ou huit, par exemple.

Le dispositif d'intégration illustré sur la figure 1 comprend un mât tubulaire 10, de section circulaire uniforme. A son extrémité basse, le mât tubulaire 10 est prévu pour être fixé à la structure du lanceur (non représenté) par l'intermédiaire d'un adaptateur tronconique 12. L'agencement est alors tel que l'axe du mât tubulaire 10 est confondu avec celui du lanceur.

Sur sa surface périphérique extérieure, le mât 10 est divisé dans le sens de sa circonférence en trois zones ou postes aptes à recevoir chacun un satellite 14. Chacune de ces zones ou postes est matérialisée par quatre supports 16 disposés selon une configuration rectangulaire. Plus précisément, les quatre supports 16 d'un même poste sont alignés deux à deux selon deux génératrices et selon deux sections du mât tubulaire 10.

Chacun des supports 16 fait saillie sur la surface circonférentielle extérieure du mât 10 et comporte une face plane 17 traversée en son centre par une lumière circulaire 18. Plus précisément, les faces planes des quatre support 16 d'un même poste sont toutes disposées dans un même plan et les centres des lumières circulaires 18 forment un rectangle dont les grands côtés sont parallèles à l'axe du mât 10. Autour de la lumière circulaire 18, chacune des faces planes des supports 16 est traversée par un certain nombre de trous 19 (quatre dans le mode de réalisation représenté) dont la fonction apparaîtra par la suite.

Sur la figure 1, l'un des satellites 14 est déjà intégré sur le lanceur alors qu'un autre satellite 14 est en cours d'intégration. Sur ce dernier satellite, on voit que sa face 20, sensiblement plane, destinée à venir accoster le poste correspondant du mât tubulaire 10, est équipée de quatre mécanismes de fixation 22. Ces quatre mécanismes de fixation 22 sont agencés selon un rectangle dont les dimensions sont identiques à celles du rectangle défini par les lumières circulaires 18 formées dans les faces planes 17 des quatre supports 16 d'un même poste du mât tubulaire 10. Les mécanismes de fixation 22 forment, avec le mât tubulaire 10 équipé des supports 16, le dispositif d'intégration conforme à l'invention.

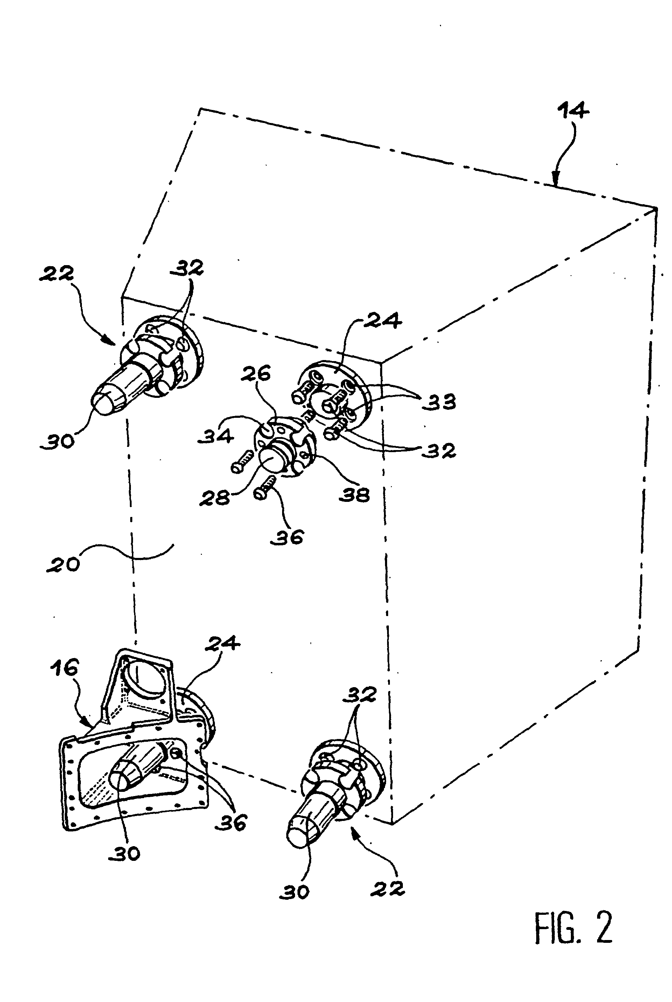

Comme on l'a illustré sur la figure 2 à différents stades de leur montage, chacun des mécanismes de fixation 22 comprend un premier organe d'interface 24, en forme de bride, un deuxième organe d'interface 26, également en forme de bride, des moyens de liaison déconnectables 28 et un capot fuselé 30 de guidage et de protection.

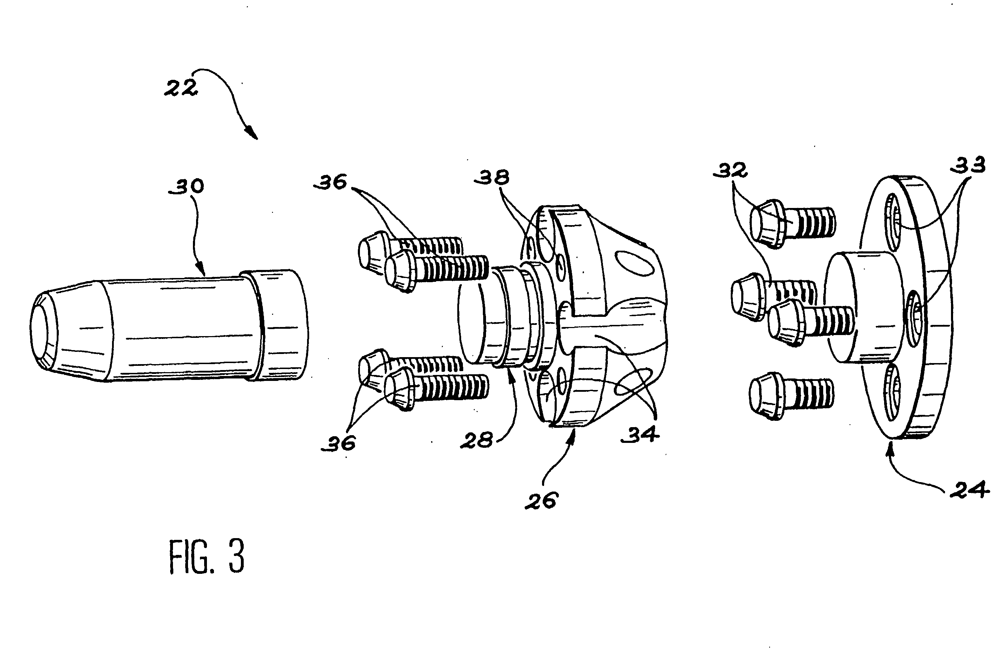

De façon plus précise, le premier organe d'interface 24 en forme de bride est prévu pour être fixé sur la face 20 du satellite 14 par des vis 32. A titre d'illustration nullement limitative de l'invention, ces vis 32 sont au nombre de quatre sur les figures 2 et 3. Chacune des vis 32 traverse un trou correspondant 33 formé dans le premier organe d'interface 24 en forme de bride et vient se visser sur la face 20 du satellite 14.

Les moyens de liaison déconnectables 28 assurent initialement la solidarisation des organes d'interface 24 et 26. Ils sont conçus pour pouvoir assurer la séparation de ces deux organes lorsqu'un signal est délivré à cet effet par un système embarqué sur le lanceur. De tels moyens de liaison déconnectables, à commande pyrotechnique, mécanique, pneumatique ou autre, sont bien connus de l'homme du métier, de sorte qu'il n'en. sera fait ici aucune description.

Du fait que les moyens de liaison déconnectables 28 relient initialement les organes d'interface 24 et 26, le premier organe d'interface 24 est fixé sur la face 20 du satellite 14 en présence du deuxième organe d'interface 26. Pour permettre la manoeuvre des vis 32 nécessaires à cette fixation, des évidements circulaires 34 sont donc prévus dans le deuxième organe d'interface 26, en face des trous 33 formés dans le premier organe d'interface 24.

Comme l'illustrent notamment les figures 2 et 3, une partie des moyens de liaison déconnectables 28 fait saillie sur la face du deuxième organe d'interface 26 prévue pour être fixée sur la face plane 17 du support 16 correspondant. Le capot 30 est monté sur cette partie en saillie des moyens de liaison déconnectables, pour en assurer la protection mécanique et pour permettre le guidage du satellite 14 lorsqu'il est accosté sur le mât 10.

Selon l'invention, les mécanismes de fixation 22 sont fixés sur la face 20 du satellite 14 indépendamment les uns des autres et de préférence en usine, c'est-à-dire bien avant la campagne de tir. Sur la figure 2, le mécanisme de fixation 22 représenté en haut à droite est illustré sous forme éclatée et sans son capot 30, alors que les mécanismes de fixation 22 situés en haut à gauche et en bas à droite sont représentés après leur fixation sur la face 20 du satellite 14 à l'aide des vis 32. Le dernier mécanisme de fixation 22, situé en bas à gauche, est représenté fixé sur l'un des supports 16 porté par le mât tubulaire 10, ce support étant vu depuis l'intérieur du mât et ce dernier n'étant pas représenté.

Chacun des capots 30 présente une extrémité fuselée, destinée à faciliter le positionnement du satellite 14 par rapport au mât, lors de l'opération d'accostage. Le diamètre extérieur de chaque capot 30, à son extrémité adjacente au deuxième organe d'interface 26, est pratiquement égal à celui des lumières circulaires 18.

Lorsque les quatre mécanismes de fixation 22 ont été montés, indépendamment l'un de l'autre, sur la face 20 d'un même satellite 14, celui-ci peut être intégré aisément et rapidement sur le lanceur, afin d'y être fixé depuis l'intérieur du mât 10. Il est à noter que cette dernière opération peut être mise en oeuvre facilement par un seul opérateur sans aucun moyen de manutention.

Comme on l'a déjà mentionné, les quatre mécanismes de fixation 22 sont montés, de préférence en usine, sur la face 20 d'un satellite 14 dont le lancement doit être effectué plus tard.

Lors de la campagne de tir, le mât tubulaire 10 est monté sur le lanceur par l'intermédiaire de l'adaptateur 12. Chacun des satellites 14 dont le lancement est prévu est ensuite intégré sur le lanceur. A cet effet, chaque satellite 14 est accosté à tour de rôle sur le mât tubulaire 10, de telle sorte que les parties en saillie des moyens de liaison déconnectables 28, recouvertes par les capots fuselés 30, pénètrent dans les lumières circulaires 18 des supports 16 correspondants.

Lors de cette opération d'accostage, l'extrémité fuselée de chacun des capots 30 assure le centrage et le guidage de chacun des mécanismes de fixation 22 par rapport aux lumières circonférentielles 18 formées sur les supports 16. Les capots fuselés 30 protègent aussi des chocs éventuels les parties en saillie des moyens de liaison déconnectables 28.

Lorsque l'accostage du satellite 14 est terminé, un opérateur fixe le deuxième organe d'interface 26 de chaque mécanisme de fixation 22 sur la face plane 17 du support 16 correspondant. Cette fixation est effectuée, depuis l'intérieur du mât tubulaire 10, par des vis 36 qui traversent librement les trous 19 formés dans la face plane 17 du support 16. Les vis 36 sont vissées dans des trous taraudés 38 prévus à cet effet dans le deuxième organe d'interface 26. Plus précisément, les trous taraudés 38 sont formés entre les évidements 34, comme l'illustrent les figures 2 et 3. Dans le mode de réalisation illustré à titre d'exemple non limitatif, quatre vis 36 sont utilisées pour chacun des mécanismes de fixation 22.

Grâce à l'agencement décrit, la fixation de chacun des deuxièmes organes d'interface 26 sur le support 16 correspondant s'effectue séparément. Cela permet à un seul opérateur d'effectuer cette opération, sans qu'il ait à utiliser des moyens de manutention particuliers.

Lorsque les quatre mécanismes de fixation 22 ont été fixés aux quatre supports 16, les capots 30 sont retirés et les moyens de liaison déconnectables 28 sont connectés à un système de commande (non représenté) embarqué sur le lanceur. Lorsque le satellite 14 doit être séparé du lanceur pour sa mise en orbite, ce système de commande émet un ordre qui permet d'actionner simultanément les quatre moyens de liaison déconnectables 28. Dans chacun des mécanismes de fixation 22, le premier organe d'interface 24 est alors séparé du deuxième organe d'interface 26.

Il est à noter que chacun des supports 16 est avantageusement équipé d'un dispositif d'éjection 40 .(figure 1) apte à exercer une poussée radiale sur chacun des satellites 14 intégrés sur le lanceur. Cette poussée radiale permet d'écarter automatiquement le satellite du mât 10 lorsque les organes 24 et 26 sont séparés par la mise en oeuvre des moyens de liaison déconnectables 28. Les dispositifs d'éjection 40 sont des dispositifs bien connus de l'homme du métier de sorte qu'il n'en sera pas fait de description particulière.

Il est à noter qu'en variante, les dispositifs d'éjection 40 peuvent être intégrés dans les moyens de liaison déconnectables 28.

Afin notamment d'assurer l'alimentation électrique de certains des équipements des satellites 14 ou de recueillir des informations en provenance de ces équipements lorsque les satellites sont encore intégrés sur le lanceur, la face 20 des satellites 14 peut être munie d'au moins un connecteur électrique 42, à proximité de l'un des mécanismes de fixation 22. Le support 16 prévu pour coopérer avec ce mécanisme de fixation 22 est alors également équipé d'un connecteur électrique 44, qui vient en prise avec le connecteur électrique 42 du satellite 14 lorsque celui-ci est accosté sur le mât 10.

. Bien entendu, le mode de réalisation qui vient d'être décrit en référence aux figures 1 à 3 ne constitue qu'un exemple de mise en oeuvre possible de l'invention.

Ainsi et comme on l'a déjà indiqué, le nombre des satellites 14 susceptibles d'être intégrés sur un même lanceur peut être différent de trois, sans sortir du cadre de l'invention. Par ailleurs, les satellites embarqués sur un même lanceur peuvent être identiques ou différents.

De façon comparable, le nombre des mécanismes de fixation 22 et des supports 16 assurant l'interface entre chacun des satellites 14 et le mât tubulaire 10 peut être différent de quatre et ces fixations ne forment pas nécessairement un rectangle et ne sont pas forcément coplanaires. Ainsi, une interface utilisant par exemple trois mécanismes de fixation 22 et trois supports 16 agencés de façon à former un triangle peut être utilisée.

Dans le même esprit le mât portant les satellites peut être remplacé par tout support apte à être monté sur le lanceur et à recevoir plusieurs satellites à l'aide de plusieurs mécanismes de fixation conformes à l'invention. Le mât peut notamment être remplacé par un plateau. Dans le cas où un mât est utilisé, celui-ci peut présenter une section quelconque (circulaire, polygonale, elliptique, etc.) et son axe peut être aligné ou décalé par rapport à celui du lanceur, sans sortir du cadre de l'invention. En d'autres termes, la géométrie du support et la disposition et le nombre des points de fixation dépendent de l'architecture globale du lanceur et de celle des satellites et s'adaptent à celles-ci.

## Revendications

1. Procédé d'intégration de satellites (14) sur un lanceur, dans lequel on équipe le lanceur d'un support (10) porte-satellites, procédé **caractérisé en ce qu'**il comprend les étapes suivantes :
- montage, sur un satellite (14) à intégrer, d'une pluralité de mécanismes de fixation (22) indépendants les uns des autres, comprenant chacun un premier organe d'interface (24) fixé sur le satellite et un deuxième organe d'interface (26) relié au premier organe d'interface (24) par des moyens de liaison déconnectables (28) ;
- accostage du satellite (14) sur le support (10) ; et
- fixation séparée du deuxième organe d'interface (26) de chaque mécanisme de fixation (22) sur le mât (10).

2. Procédé selon la revendication 1, dans lequel chaque mécanisme de fixation (22) monté sur le satellite (14) à intégrer comprend un capot fuselé (30) de guidage et de protection recouvrant les moyens de fixation déconnectables (22), le capot (30) pénétrant dans une lumière (18) correspondante du support (10) lors de l'accostage du satellite (14) sur le support (10) et étant enlevé après la fixation du deuxième organe d'interface (26) sur le support (10).

3. Procédé selon l'une quelconque des revendications précédentes, dans lequel chaque mécanisme de fixation (22) est assemblé et réglé avant d'être monté sur le satellite (14).

4. Procédé selon l'une quelconque des revendications précédentes, dans lequel on monte les mécanismes de fixation (22) sur le satellite (14) avant accostage du satellite (14) sur le support (10).

5. Procédé selon l'une quelconque des revendications précédentes, dans lequel on monte sur le satellite (14) quatre mécanismes de fixation (22).

6. Procédé selon l'une quelconque des revendications précédentes, dans lequel on fixe le deuxième organe d'interface (26) de chaque mécanisme d'interface (22) sur le support (10) depuis l'intérieur de celui-ci.

7. Dispositif d'intégration de satellites (14) sur un lanceur, comprenant un support (10) apte à être fixé au lanceur et des moyens de montage d'une pluralité de satellites (14) sur ledit support (10), **caractérisé en ce que** lesdits moyens de montage comprennent une pluralité de mécanismes de fixation (22), aptes à être montés individuellement sur un satellite (14) à intégrer, chaque mécanisme de fixation (22) comprenant un premier organe d'interface (24) apte à être fixé sur le satellite (14) et un deuxième organe d'interface (26) relié au premier organe d'interface (24) par des moyens de liaison déconnectables (28) et apte à être fixé séparément au support (10) lorsque le satellite (14) est accosté sur celui-ci.

8. Dispositif selon la revendication 7, dans lequel chaque mécanisme de fixation (18) comprend de plus un capot fuselé (30) de guidage et de protection, recouvrant les moyens de liaison déconnectables (22), ledit capot (30) pénétrant dans une lumière (18) correspondante formée dans le support (10) et étant apte à être démonté après la fixation du deuxième organe d'interface (26) sur le support (10).

9. Dispositif selon l'une quelconque des revendications 7 et 8, dans lequel les moyens de montage comprennent quatre mécanismes de fixation (22).

10. Dispositif selon l'une quelconque des revendications 7 à 9, dans lequel le deuxième organe d'interface (26) est fixé sur le support (10) par des organes de fixation (22) accessibles depuis l'intérieur du support (10).

## Patentansprüche

1. Verfahren zum Anbringen von Satelliten (14) auf einer Trägerrakete, bei dem man die Trägerrakete mit einem Satellitenträger (10) ausstattet, wobei das Verfahren **dadurch gekennzeichnet ist, dass** es die folgenden Schritte umfasst:
- Montage einer Mehrzahl voneinander unabhängiger Befestigungsmechanismen (22) auf einem anzubringenden Satelliten (14), die jeweils ein am Satelliten befestigtes erstes Schnittstellenorgan (24) sowie ein zweites Schnittstellenorgan (26) umfassen, welches mittels lösbarer Verbindungsmittel (28) mit dem ersten Schnittstellenorgan (24) verbunden ist;
- Ankoppeln des Satelliten (14) am Träger (10); und
- getrennte Befestigung des zweiten Schnittstellenorgans (26) jedes Befestigungsmechanismus (22) am Mast (10).

2. Verfahren nach Anspruch 1, wobei jeder Befestigungsmechanismus (22), der am anzubringenden Satelliten (14) montiert ist, eine stromlinienförmige Führungs- und Schutzhaube (30) umfasst, die die lösbaren Befestigungsmittel (22) bedeckt, wobei die Haube (30) beim Ankoppeln des Satelliten (14) am Träger (10) in eine entsprechende Öffnung (18) des Trägers (10) eindringt und nach der Befestigung des zweiten Schnittstellenorgans (26) am Träger (10) entfernt wird.

3. Verfahren nach einem der vorhergehenden Ansprüche, bei dem jeder Befestigungsmechanismus (22) zusammengebaut und eingestellt wird, bevor er am Satelliten (14) montiert wird.

4. Verfahren nach einem der vorhergehenden Ansprüche, bei dem man die Befestigungsmechanismen (22) am Satelliten (14) montiert, bevor der Satellit (14) am Träger (10) angekoppelt wird.

5. Verfahren nach einem der vorhergehenden Ansprüche, bei dem man vier Befestigungsmechanismen (22) am Satelliten (14) montiert.

6. Verfahren nach einem der vorhergehenden Ansprüche, bei dem man das zweite Schnittstellenorgan (26) jedes Schnittstellenmechanismus (22) am Träger (10) von dessen Innenseite her befestigt.

7. Vorrichtung zum Anbringen von Satelliten (14) an einer Trägerrakete, umfassend einen Träger (10), der dazu ausgelegt ist, an der Trägerrakete befestigt zu werden, sowie Mittel zur Montage einer Mehrzahl von Satelliten (14) am Träger (10), **dadurch gekennzeichnet, dass** die Montagemittel eine Mehrzahl von Befestigungsmechanismen (22) umfassen, die dazu ausgelegt sind, einzeln an einem anzubringenden Satelliten (14) montiert zu werden, wobei jeder Befestigungsmechanismus (22) ein erstes Schnittstellenorgan (24) umfasst, das dazu ausgelegt ist, am Satelliten (14) befestigt zu werden, sowie ein zweites Schnittstellenorgan (26), das mittels lösbarer Verbindungsmittel (28) mit dem ersten Schnittstellenorgan (24) verbunden und dazu ausgelegt ist, getrennt am Träger (10) befestigt zu werden, wenn der Satellit (14) an selbigem angekoppelt wird.

8. Vorrichtung nach Anspruch 7, bei der jeder Befestigungsmechanismus (18) ferner eine stromlinienförmige Führungs- und Schutzhaube (30) umfasst, die die lösbaren Verbindungsmittel (22) bedeckt, wobei die Haube (30) in eine im Träger (10) gebildete entsprechende Öffnung (18) eindringt und dazu ausgelegt ist, nach der Befestigung des zweiten Schnittstellenorgans (26) am Träger (10) demontiert zu werden.

9. Vorrichtung nach einem der Ansprüche 7 und 8, bei der die Montagemittel vier Befestigungsmechanismen (22) umfassen.

10. Vorrichtung nach einem der Ansprüche 7 bis 9, bei der das zweite Schnittstellenorgan (26) am Träger (10) mittels Befestigungsorganen (22) befestigt ist, die von der Innenseite des Trägers (10) her zugänglich sind.

## Claims

1. Process for the integration of satellites (14) on a launcher, in which a satellite support mounting (10) is installed on the launcher, **characterized in that** it comprises the following steps:
- installation of several attachment mechanisms (22) independent of each other on a satellite (14) to be integrated, each mechanism comprising a first interface device (24) fixed on the satellite and a second interface device (26) connected to the first interface device (24) by disconnectable connection means (28);
- docking of the satellite (14) onto the support (10); and
- separate attachment of the second interface device (26) of each attachment mechanism (22) onto the mast (10).

2. Process according to claim 1, in which each attachment mechanism (22) installed on the satellite (14) to be integrated comprises a round-ended guidance and protection cover (30) covering the disconnectable attachment means (22), the cover (30) penetrating into a corresponding hole (18) in the support (10) when the satellite (14) is docked onto the support (10), and being removed after the second interface device (26) has been fixed on the support (10).

3. Process according to any one of the previous claims, in which each attachment mechanism (22) is assembled and adjusted before being installed on the satellite (14).

4. Process according to any one of the previous claims, in which the attachment mechanisms (22) are installed on the satellite (14) before the satellite (14) is docked onto the support (10).

5. Process according to any one of the previous claims, in which four attachment mechanisms (22) are installed on the satellite (14).

6. Process according to any one of the previous claims, in which the second interface device (26) on each interface mechanism (22) is fixed on the support (10) from inside the support.

7. Device for integrating satellites (14) on a launcher, comprising a support (10) that can be fixed to the launcher and means of installing several satellites (14) on the said support (10), **characterized in that** the said installation means comprise several attachment mechanisms (22) that can be installed individually on a satellite (14) to be integrated, each attachment mechanism (22) comprising a first interface device (24) that can be fixed on the satellite (14) and a second interface device (26) connected to the first interface device (24) by disconnectable connection means (28) and that can be fixed to the support (10) separately when the satellite (14) is docked onto the support.

8. Device according to claim 7 in which each attachment mechanism (18) also comprises a round-ended guidance and protection cover (30) covering the disconnectable connection means (32), the said cover (30) penetrating into a corresponding hole (18) formed in the support (10) and capable of being removed after the second interface device (26) has been fixed to the support (10).

9. Device according to either of claims 7 and 8, in which the installation means comprise four attachment mechanisms (22).

10. Device according to any one of claims 7 to 9, in which the second interface device (26) is fixed to the support (10) by attachment devices (22) accessible from inside the support (10).
